# DEMANDE DE BREVET EUROPEEN

(11) **EP 1 923 253 A1**
(43) Date de publication de la demande: **21.05.2008**
(21) Numéro de dépôt: 07120599.1
(22) Date de dépôt: 13.11.2007
(51) Int. Cl.: B60K 11/04, B60R 21/34

(54) **Face avant pour véhicule automobile**

(30) Priorité: 20.11.2006 FR 0610133
(71) Demandeur: Valeo Systèmes Thermiques, 78321 Le Mesnil Saint-Denis Cedex (FR)
(72) Inventeur: Courdier, Paul, 78320, Le Mesnil-Saint-Denis (FR); Simonin, Michel, 78180, Montigny-le-Bretonneux (FR); Lanard, Jean-Louis, 78310, Feucherolles (FR); Gessier, Bertrand, 78490, Montfort-l'Amaury (FR)

(57) **Abrégé**

L'invention concerne une face avant pour véhicule automobile comportant une armature de support pour au moins un élément d'équipement du véhicule (18). L'armature comporte des moyens de fixation pour un premier échangeur de chaleur (18) et les moyens de fixation permettent un maintien orienté de l'échangeur de chaleur de manière à ce que celui-ci constitue un absorbeur de choc.

Application au domaine automobile.

## Description

L'invention concerne une face avant pour véhicule automobile comportant une armature de support pour au moins un élément d'équipement du véhicule.

Une face avant constitue un élément unitaire préparé et livré par l'équipementier, prêt à être monté sur le véhicule par le constructeur. Le montage de cet élément ou module unitaire se fait par raccordement à des éléments de structure latéraux du véhicule, tels que les longerons, ailes ou coques.

La face avant est un élément de structure susceptible d'intégrer divers équipements du véhicule, tels que, par exemple, projecteurs, clignotants, avertisseur sonore, échangeur thermique, groupe moto-ventilateur ou modules d'échangeurs thermiques de refroidissement des différents fluides circulant dans un véhicule automobile tels que, par exemple, le liquide de refroidissement moteur ou le fluide réfrigérant du circuit de climatisation.

Il est notamment connu des faces avant équipées de modules d'échangeurs thermiques, lesdits modules étant notamment constitués d'un radiateur de refroidissement moteur et d'un condenseur intégré à la boucle de climatisation. Il est aussi connu de munir une face avant d'autres types d'échangeurs de chaleur tels que des refroidisseurs d'air de suralimentation.

Les besoins en refroidissement des différents fluides circulant dans un véhicule automobile étant de plus en plus importants, les échangeurs de chaleurs sont amenées à occuper de volume en face avant.

En outre et à cause de son positionnement à l'avant d'un véhicule automobile, la face avant est l'élément de contact qui est sollicité lors d'un choc frontal. Elle doit donc être apte à absorber des chocs.

Il est ainsi déjà connu d'équiper les faces avant de véhicule automobile de dispositifs tels que des pare-chocs ou des absorbeurs d'énergie comportant des structures cellulaires permettant une absorption optimale de l'énergie libérée lors d'un choc. Ces dispositifs sont destinés à absorber tout ou partie des chocs subis par le véhicule automobile et sont disposés en des endroits spécifiques du véhicule.

Ces dispositifs peuvent posséder un encombrement non négligeable du fait des normes en vigueur concernant la protection des piétons en cas de collision, s'ajoutant à l'encombrement des échangeurs thermiques.

L'invention vise à améliorer la situation.

Elle propose à cet effet une face avant telle que décrite précédemment dans laquelle l'armature comporte des moyens de fixation pour un premier échangeur de chaleur. Les moyens de fixation permettent un maintien orienté de l'échangeur de chaleur de manière à ce que celui-ci constitue un absorbeur de choc.

Une telle face avant permet d'avoir un véhicule automobile répondant aux spécifications des différentes normes en vigueur concernant l'absorption de choc tout en garantissant un refroidissement efficace des différents fluides à refroidir dans le véhicule automobile.

D'autres avantages et caractéristiques de 1'invention apparaîtront mieux à la lecture de la description à titre illustratif et non limitatif d'exemples issus des figures sur les dessins annexés dans lesquels:
- La figure 1 est une vue schématique en perspective d'une face avant selon l'invention, vue de l'avant.
- La figure 2 est une vue schématique arrière, en perspective, d'une face avant selon un autre mode de réalisation de l'invention. Dans cette vue la face avant n'a été que partiellement représentée.
- La figure 3 représente une vue schématique avant, en perspective, d'une face avant selon encore un autre mode de réalisation de l'invention. Dans cette vue la face avant n'a été que partiellement représentée.

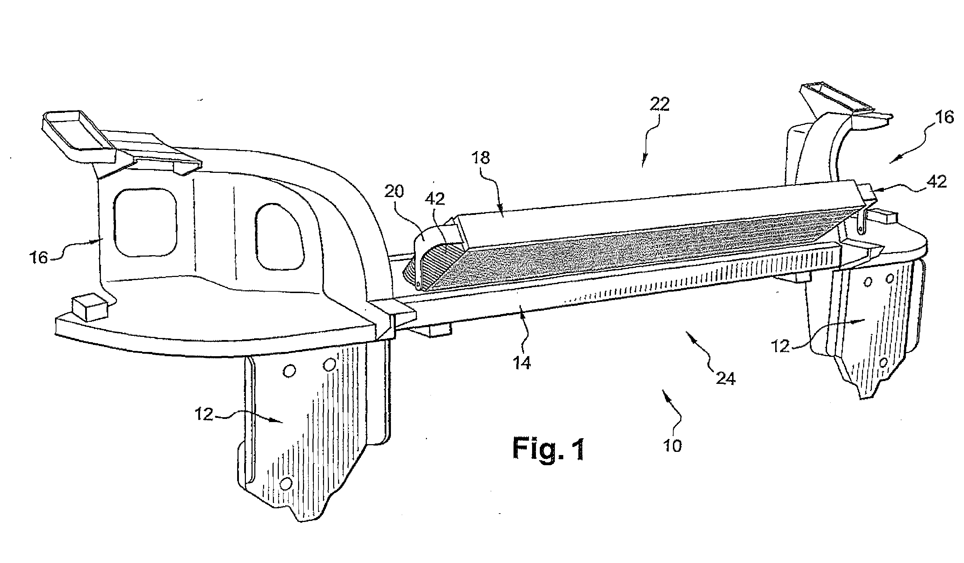

Comme illustré à la figure 1, l'invention concerne une face avant 10 de véhicule automobile. La face avant 10 se présente sous la forme d'une armature comprenant par exemple deux jambages 12 sensiblement verticaux destinés à être disposés respectivement du côté droit et du côté gauche du véhicule. Ces deux jambages 12, encore appelés "montants" ou "quarts", sont réunis entre eux, dans l'exemple, par une traverse 14 s'étendant selon au moins un axe transversal qui est, dans l'exemple représenté, un axe sensiblement horizontal. La traverse 14 est prévue entre les extrémités supérieures des jambages 12. En plus de s'étendre selon un axe transversal, la traverse 14 s'étend aussi selon un axe longitudinal. Les axes longitudinal et transversal forment un plan dans lequel est disposé la traverse 14.

On entend par axe transversal, l'axe correspondant à l'axe d'extension générale de la traverse, qui se situe sur la figure 1 de la gauche vers la droite. Autrement dit, l'axe transversal est apte à être orienté selon la largeur du véhicule automobile. L'axe longitudinal est quant à lui perpendiculaire à l'axe transversal et perpendiculaire au plan des jambages. Autrement dit l'axe longitudinal est apte à être orienté dans le sens de la longueur ou profondeur du véhicule automobile.

Selon l'exemple représenté, à partir de chaque montant 12 s'étend vers l'extérieur et/ou vers l'arrière un bras 16 sensiblement horizontal. Les bras 16 et les montants 12 correspondants définissent un logement destiné à recevoir notamment une optique de phare (non représentée). Le logement destiné à recevoir notamment une optique de phare s'étend vers l'arrière du plan de l'armature.

Dans le mode de réalisation représenté à la figure 1, la traverse 14 et les jambages 12 forment un logement 22.

Dans l'exemple représenté, le logement 22 est situé au dessus de la traverse 14.

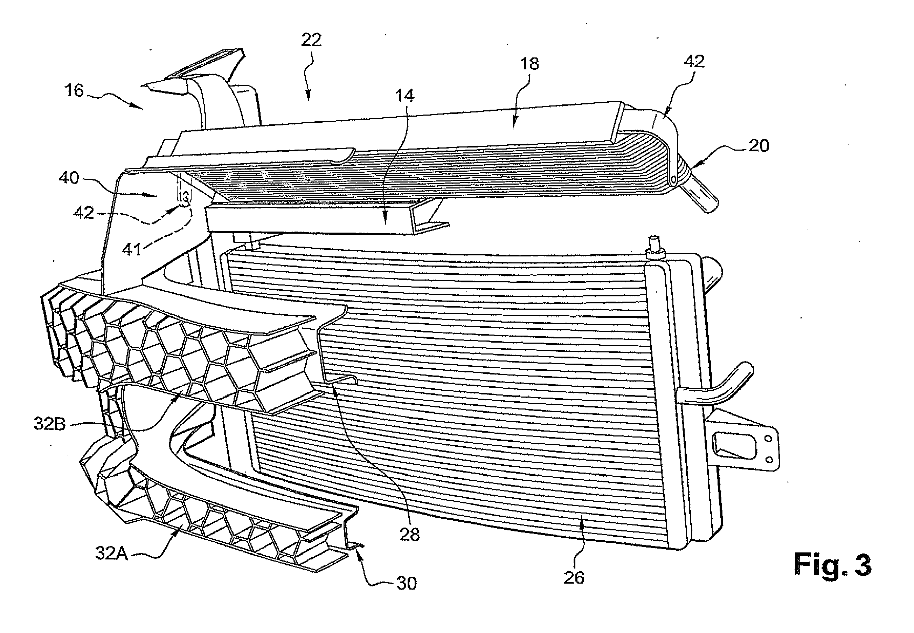

La face avant pourra être équipée d'éléments 40 (visibles sur la figure 3) pour la déviation du flux d'air communément désignés « convergents ».

Le convergent 40 pourra être monté sur la partie supérieure de la face avant 10 et fixé à ses extrémités au niveau de la partie supérieure des jambages 12.

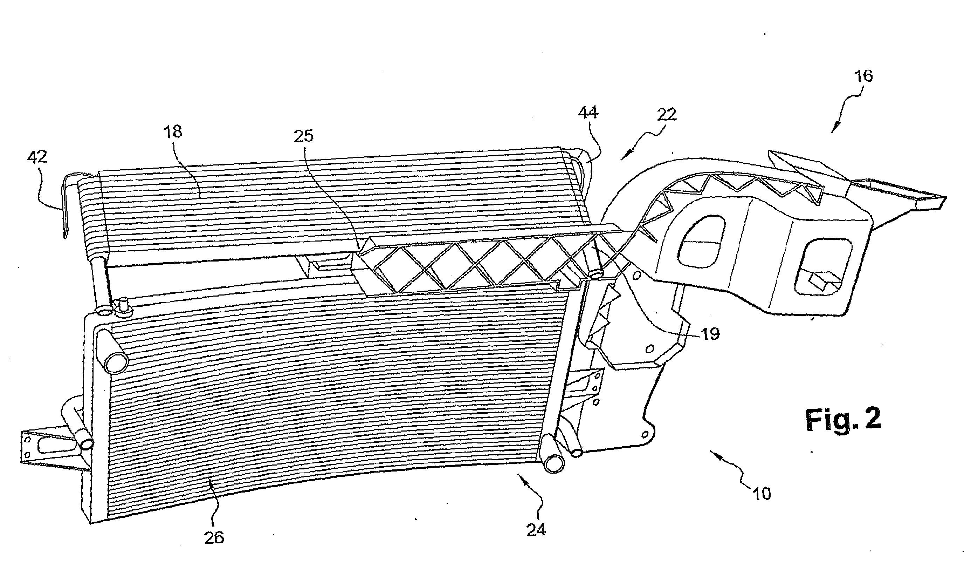

Comme illustré à la figure 2, l'armature comporte des moyens de fixation 42 pour un premier échangeur de chaleur 18. Ces moyens de fixation permettent un maintien orienté de l'échangeur de chaleur 18 de manière à ce que celui-ci constitue un absorbeur de choc. On entend par maintien orienté le fait que l'échangeur de chaleur 18 est positionné sur la face avant de manière à favoriser l'absorption d'un choc frontal (comme cela est également représenté aux figures 1 et 3) avec, par exemple, un piéton.

Comme illustré à la figure 3, le convergent 40 comporte un orifice 41 apte à coopérer avec un moyen de liaison 42 du premier échangeur de chaleur. L'élément de liaison 42 est ici réalisé sous la forme sous d'une patte. Les moyens de fixation du premier échangeur de chaleur sont prévus sur la face avant 10.

Selon un mode de réalisation de l'invention, le logement 22, prévu situé au dessus de la traverse 14, accueille au moins en partie les moyens de fixation 42 du premier échangeur de chaleur 18.

Selon l'exemple illustré, l'échangeur de chaleur 18 destiné à constituer un absorbeur de choc est prévu lui aussi monté sur ladite armature. Dans la variante représenté, l'échangeur de chaleur 18 est maintenu sur la traverse 14.

L'échangeur de chaleur 18 est constitué d'un faisceau de tubes parallèles montés entre au moins deux collecteurs 20. Les tubes alternent avec des intercalaires, par exemple, de type ondulés. L'échangeur de chaleur permet un échange entre un premier fluide à refroidir circulant dans les tubes et un deuxième fluide qui circule entre les intercalaires. Le premier fluide à refroidir peut être, par exemple, du liquide refroidissement moteur et le deuxième fluide de l'air.

Le premier échangeur 18 comporte deux collecteurs 20 (dont un seul est visible sur la figure 1). Les deux collecteurs sont disposés de manière perpendiculaire à l'axe transversal de la traverse 14.

Les collecteurs 20 présentent des zones de faiblesse autorisant l'écrasement des collecteurs 20 en cas de choc.

Pour cela, dans l'exemple représenté, 1'échangeur de chaleur 18 est, formé par des tubes, par exemple généralement plats, ayant deux extrémités et des embouts fixés auxdites deux extrémités des tubes.

Les embouts sont en appui les uns sur les autres et comportent des passages de communication qui permettent, d'une part, le passage du liquide à refroidir dans les différents embouts et, d'autre part, le passage du liquide à refroidir entre l'embout et le tube plat auquel il est fixé.

Autrement dit, le premier échangeur 18 comporte en outre des tubes reliant les collecteurs 20 et les collecteurs 20 sont constitués d'une superposition d'embouts. Chaque embout est fixé à l'extrémité longitudinale d'un tube. Chaque embout est apte à permettre, d'une part, une communication de fluide (ici de fluide à refroidir) entre les différents embouts et, d'autre part, une communication de fluide entre chaque embout et le tube auquel il est fixé.

Dans un mode de réalisation non représenté, les deux collecteurs sont disposés de manière parallèle à l'axe transversal de la traverse 14. Dans un tel mode de réalisation, la circulation du fluide à refroidir se fait au moins en partie grâce à la pesanteur.

Dans le mode de réalisation présenté à la figure 1, le premier échangeur 18 est incliné d'un angle compris entre 20° et 40° par rapport au plan défini par l'axe transversal et longitudinal de la traverse 14 selon une orientation apte à se trouver en direction de l'avant du plan de l'armature ou en direction de l'avant du véhicule équipée d'une face avant selon l'invention. Un mode de réalisation particulier propose que l'angle soit de 38°.

Selon un premier mode de réalisation correspondant à celui illustré à la figure 1, l'échangeur de chaleur 18 est incliné en permanence selon cet angle.

Une variante de réalisation propose que le premier échangeur 18 et/ou l'armature sont équipés de moyens fusibles aptes à permettre une rotation du premier échangeur de chaleur 18 entre une première position dite d'échange thermique et une deuxième position dite d'absorption de choc.

On entend par moyens fusibles, tout moyens cassables, destructibles suite à la détection d'un choc subi par le véhicule automobile.

Dans un tel cas, la première position correspond à une situation où le véhicule automobile n'a pas subi de chocs. Dans un tel cas de figure, le premier échangeur de chaleur se trouve sensiblement dans lé même plan que celui des jambages 12. La deuxième position correspond à une situation où le véhicule automobile a subi un choc frontal. Dans un tel cas de figure, le premier échangeur de chaleur se trouve alors incliné selon les angles évoqués plus haut.

Comme illustré à la figure 2, la face avant peut comporter en outre un second échangeur de chaleur 26 situé sous la traverse 14 et donc sous le logement 22 où est implanté le premier échangeur de chaleur 18. Le second échangeur de chaleur 22 est ainsi implanté dans un second logement 24. Ce logement 24 est formé par les extrémités inférieures des jambages 12 et la traverse 14.

Dans ce mode de réalisation, la traverse est munie de moyens de support/maintien 25 permettant de positionner et d'orienter directement le premier échangeur de chaleur 18 selon un angle déterminé. Ces moyens 25 sont sous la forme de rainures d'accueil orientées dans lesquelles on viendra fixer le premier échangeur de chaleur 18.

Dans le mode de réalisation représenté à la figure 2, la traverse 14 comporte au moins un orifice 19 apte à recevoir au moins une partie du collecteur 20 du premier échangeur de chaleur 18 de manière à autoriser une communication de fluide entre les premier et deuxième échangeurs de chaleur 18 et 26.

Comme illustré à la figure 3, un autre mode de réalisation d'une face avant selon l'invention propose que l'armature soit équipée en outre de deux poutres respectivement une poutre pare-chocs 28 et une poutre piéton 30. Les deux poutres 28 et 30 sont munies d'absorbeurs de chocs 32A et 32B. Dans le mode de réalisation représenté, les deux absorbeurs de chocs sont réalisés monobloc de manière à définir un bouclier de protection qui va contribuer à l'absorption d'un choc piéton frontal.

Les poutres 28 et 30 s'étendent en avant de l'armature de la face avant, c'est-à-dire en direction de l'avant du véhicule automobile.

Ainsi, lors d'un choc entre un véhicule automobile équipé d'une face avant selon le mode de réalisation illustré à la figure 3 et un piéton, la jambe du piéton rencontre trois points d'impact. La cheville du piéton va être protégée par la poutre piéton 30 et l'absorbeur de choc 32A assujetti à cette dernière. Le genou du piéton va être protégé par la poutre pare-chocs 28 et l'absorbeur de choc 32B assujetti à cette dernière. Enfin, la hanche du piéton va être protégée par le premier échangeur de chaleur 18 qui agi comme un absorbeur de choc, en étant positionné vers l'avant du véhicule. On entend par avant du véhicule une direction en avant par rapport au plan de la traverse et des jambages, c'est-à-dire dans la même direction que les poutres piéton 30 et pare-chocs 28.

L'invention ne se limite pas aux modes de réalisation décrits ci avant, seulement à titre d'exemples, mais elle englobe toutes les variantes que pourra envisager l'homme de l'art dans le cadre des revendications ci-après. Les variantes décrites précédemment peuvent être prises séparément ou en combinaison les unes avec les autres.

## Revendications

1. Face avant pour véhicule automobile comportant une armature de support pour au moins un élément d'équipement (18) du véhicule, **caractérisée en ce que** ladite armature comporte des moyens de fixation pour un premier échangeur de chaleur (18), lesdits moyens de fixation permettant un maintien orienté dudit échangeur de chaleur de manière à ce que celui-ci constitue un absorbeur de choc.

2. Face avant selon la revendication 1, dans laquelle ladite armature comporte au moins une traverse (14) et dans laquelle ladite traverse (14) s'étend selon au moins un axe transversal, ledit axe transversal étant apte à être orienté selon la largeur du véhicule automobile.

3. Face avant selon la revendication 2, comprenant ledit premier échangeur de chaleur (18) et dans laquelle ledit premier échangeur (18) comporte au moins deux collecteurs (20), lesdits deux collecteurs (20) étant disposés de manière parallèle à 1'axe transversale de ladite traverse (14).

4. Face avant selon la revendication 2, comprenant ledit premier échangeur de chaleur (18) et dans laquelle ledit premier échangeur (18) comporte au moins deux collecteurs (20), lesdits deux collecteurs (20) étant disposés de manière perpendiculaire à l'axe transversale de ladite traverse (14).

5. Face avant selon la revendication 3 ou 4, dans laquelle lesdits collecteurs (20) présentent des zones de faiblesse autorisant l'écrasement desdits collecteurs (20) en cas de choc.

6. Face avant selon la revendication précédente, dans laquelle ledit premier échangeur (18) comporte en outre des tubes reliant lesdits collecteurs et dans laquelle lesdits collecteurs (20) sont constitués d'une superposition d'embouts, chaque dit embout étant fixé à l'extrémité longitudinale d'un dit tube, chaque dit embout étant apte à permettre, d'une part, une communication de fluide entre les différents embouts et, d'autre part, une communication de fluide entre chaque dit embout et ledit tube auquel il est fixé.

7. Face avant selon l'une des revendications précédentes, dans laquelle ladite traverse (14) s'étend également selon un axe longitudinal apte à être orienté selon la longueur du véhicule, ledit axe longitudinal et ledit axe transversal formant un plan, et dans laquelle ledit premier échangeur (18) est incliné d'un angle compris entre 20° et 40° par rapport audit plan de ladite traverse (14).

8. Face avant selon l'une des revendications 1 à 7, dans laquelle ledit premier échangeur (18) et/ou ladite armature sont équipées de moyens fusibles apte à permettre une rotation dudit premier échangeur de chaleur (18) entre une première position, dite d'échange thermique et une deuxième position, dite d'absorption de choc.

9. Face avant selon l'une des revendication 2 à 8, dans laquelle ladite armature comporte en outre des jambages (12), et dans laquelle ladite traverse (14) et lesdits jambages (12) forment un logement (22) et dans laquelle ledit logement (22), prévu situé au dessus de ladite traverse (14), accueille au moins en partie lesdits moyens de fixation dudit premier échangeur de chaleur (18).

10. Face avant selon l'une des revendications 2 à 9, laquelle comporte en outre un second échangeur de chaleur (26), ledit second échangeur de chaleur (26) étant situé sous ladite traverse (14).

11. Face avant selon l'une des revendications 8 à 10, dans laquelle ladite traverse supérieure (14) comporte au moins un orifice apte à recevoir au moins une partie d'un collecteur (20) dudit premier échangeur de chaleur (18) de manière à autoriser une communication de fluide entre lesdits premier et deuxième échangeurs de chaleur (18 ; 26).
